# EUROPÄISCHE PATENTSCHRIFT

(11) **EP 1 369 318 B1**
(45) Veröffentlichungstag und Bekanntmachung des Hinweises auf die Patenterteilung: **30.03.2005**
(21) Anmeldenummer: 03011133.0
(22) Anmeldetag: 23.05.2003
(51) Int. Cl.: B60R 22/195

(54) **Vorrichtung zum Straffen eines Sicherheitsgurts**
Device for tensioning a seat belt
Disposition de tensionnement d'une ceinture de sécurité de véhicule

(30) Priorität: 06.06.2002 DE 20208808 U
(43) Veröffentlichungstag der Anmeldung: 10.12.2003
(73) Patentinhaber: TRW Automotive GmbH, 73553 Alfdorf (DE)
(72) Erfinder: Mödinger, Thomas, 73553 Alfdorf (DE); Biller, Joachim, 73547 Lorch (DE)
(74) Vertreter: Strass, Jürgen

(56) Entgegenhaltungen:
- DE-A- 4 302 042
- DE-A- 4 332 205
- DE-A- 19 941 435
- DE-U- 20 102 758

## Beschreibung

Die Erfindung betrifft eine Vorrichtung zum Straffen eines Sicherheitsgurts, mit einem Motor und einem Zugübertragungsmittel, dessen eines Ende an ein Gurtschloß oder einen Endbeschlag des Sicherheitsgurts gekoppelt ist, wobei das Zugübertragungsmittel so an den Motor gekoppelt ist, daß die Antriebsbewegung des Motors in eine Längsbewegung des Zugübertragungsmittels umgewandelt wird.

Eine solche Vorrichtung ist aus der DE 199 61 799 A1 bekannt. Ein elektromotorischer Antrieb dient dazu, bei einem drohenden Unfall des Fahrzeugs ein Gurtschloß aus einer Normalposition in eine vorläufige Sicherheitsposition zu bringen, so daß eine erhöhte Zugkraft auf das Sicherheitsgurtband ausgeübt wird. Dieser Vorgang wird allgemein als Vorstraffung bezeichnet und erfordert nur einen Bruchteil der zur eigentlichen Straffung des Gurtbands erforderlichen Kraft. Erfolgt tatsächlich ein Aufprall, übernimmt ein separater pyrotechnisch betätigter Strafferantrieb den Notfall-Straffvorgang, bei dem das Gurtschloß in eine endgültige Sicherheitsposition befördert wird. Andernfalls wird das Gurtschloß über eine Druckfeder wieder in seine Normalposition zurückgebracht.

Nachteilig bei einem pyrotechnisch betätigten Strafferantrieb ist, daß er nur einmal verwendet werden kann. Außerdem stellt ein solcher Antrieb die zur Straffung des Gurtbands erforderliche Antriebsenergie nur über einen äußerst kurzen Zeitraum zur Verfügung. Kann aus irgendwelchen Gründen das Gurtband während dieses Zeitraums nicht ausreichend gestrafft werden, besteht keine Möglichkeit, den Straffvorgang fortzusetzen.

Die Erfindung schafft eine Vorrichtung zum Straffen eines Sicherheitsgurts, die mehrmals eingesetzt werden kann und über eine ausreichend lange Zeit eine konstante Kraft zum Straffen des Gurtbands zur Verfügung stellt. Gemäß der Erfindung ist der Motor als Strafferantrieb für eine Notfall-Straffung ausgebildet. Die Straffunktion wird allein durch den Antriebsmotor gewährleistet, ein gesonderter pyrotechnischer Strafferantrieb ist nicht mehr erforderlich. Die Erfindung beruht auf der Erkenntnis, daß Elektromotoren verfügbar sind, die in der Lage sind, in kürzester Zeit sehr hohe Drehzahlen unter Last zu erreichen. Die mit diesem Antriebskonzept realisierbaren Gurtkräfte sind zwar geringer als bei einem pyrotechnischen Strafferantrieb; im Gegensatz zu einem pyrotechnischen Strafferantrieb, bei dem ein pneumatischer Antriebsdruck sehr schnell aufgebaut wird, nach Erreichen des Maximums aber steil abfällt, bleibt das Antriebsmoment eines Elektromotors während des gesamten Vorgangs erhalten, so daß niedrigere Antriebskräfte ausreichen. Solange der Motor mit ausreichend Strom versorgt wird, kann er die zur Straffung erforderliche Leistung aufrecht erhalten. Die Gefahr, daß der Straffvorgang möglicherweise vorzeitig abgebrochen wird, besteht nicht. Nach erfolgter Straffung muß der Antrieb nicht ausgetauscht werden, da der Motor im Gegensatz zu einer pyrotechnischen Ladung nicht zerstört wird.

Vorzugsweise ist der Antriebsmotor ein bürstenloser Gleichstrommotor mit Innenläufer. Innenläufer liefern im Vergleich zu Außenläufern zwar in der Regel ein geringeres Drehmoment, haben aber ein geringeres Trägheitsmoment. Es hat sich gezeigt, daß dieses Kriterium wichtiger ist, da nur ein geringes Trägheitsmoment die erforderliche kurze Anlaufzeit ermöglicht. Außerdem erlauben bürstenlose Gleichstrommotoren zumindest kurzzeitig sehr hohe Strombelastungen, so daß ein relativ großes Startmoment ohne Schwierigkeiten realisiert werden kann. In Verbindung mit dem niedrigeren Trägheitsmoment gewährleistet das hohe Startmoment des Gleichstrommotors ein extrem schnelles Hochlaufen auf sehr hohe Drehzahlen.

Besonders vorteilhaft ist die Verwendung eines Motors, der mit verschiedenen Geschwindigkeiten betrieben werden kann. So kann der Motor sowohl die Notfall-Straffung als auch eine vorhergehende Vorstraffung übernehmen, für die keine so hohen Drehzahlen notwendig sind.

Eine zusätzliche Funktionalität der erfindungsgemäßen Vorrichtung ergibt sich dadurch, daß der Motor in zwei entgegengesetzten Richtungen betrieben werden kann. Abgesehen davon, daß dadurch nach erfolgter Straffung das Gurtschloß oder der Endbeschlag des Sicherheitsgurts auf einfache Weise wieder in die Normalposition zurückgebracht werden kann, läßt sich zudem eine Schloßbringerfunktion realisieren. Das Gurtschloß wird durch den Motor nach oben befördert, um dem Fahrzeuginsassen das Einstecken der Schloßzunge des Sicherheitsgurts zu erleichtern, und wird anschließend bei umgekehrter Betriebsrichtung des Motors wieder in die vorgeschriebene Normalposition gebracht.

Bei einer ersten bevorzugten Ausführungsform der Erfindung erfolgt die Umsetzung der Drehbewegung des Motors in eine Linearbewegung dadurch, daß an den Motor eine Gewindehülse mit Innengewinde gekoppelt und in der Gewindehülse ein Gewindekörper mit passendem Außengewinde angeordnet ist, an dem das andere Ende des Zugübertragungsmittel befestigt ist.

Bei einer zweiten bevorzugten Ausführungsform treibt der Motor ein Ritzel an, das in eine Zahnstange eingreift, an welcher das andere Ende des Zugübertragungsmittels befestigt ist. Um eine für die Bewegung der Zahnstange geeignete Übersetzung zu erhalten, ist vorzugsweise zwischen der Antriebswelle des Motors und dem Ritzel ein Planetengetriebe vorgesehen.

Bei einer dritten bevorzugten Ausführungsform weist der innenlaufende Rotor des Motors ein Innengewinde auf, in das ein Außengewinde eines Gewindekörpers eingreift, an welchem das andere Ende des Zugübertragungsmittels befestigt ist. Dies ermöglicht einen sehr kompakten Aufbau, so daß die erfindungsgemäße Vorrichtung auch als Linearstraffer ohne Umlenkung des Zugmittels ausgebildet werden kann.

Weitere Merkmale und Vorteile der Erfindung ergeben sich aus der folgenden Beschreibung und aus den beigefügten Zeichnungen, auf die bezug genommen wird. In den Zeichnungen zeigen:
- Figur 1 eine Seitenansicht einer erfindungsgemäßen Straffvorrichtung gemäß einer ersten Ausführungsform;
- Figur 2 eine Schnittansicht der Vorrichtung aus Figur 1 entlang der Linie A-A;
- Figur 3 eine geschnittene Seitenansicht einer Variante der ersten Ausführungsform;
- Figur 4 eine Schnittansicht der Vorrichtung aus Figur 3 entlang der Linie B-B;
- Figur 5 eine Draufsicht der Vorrichtung aus Figur 3;
- Figur 6 eine Seitenansicht einer erfindungsgemäßen Straffvorichtung gemäß einer zweiten Ausführungsform;
- Figur 7 eine Schnittansicht der Vorrichtung aus Figur 6;
- Figur 8 eine Seitenansicht einer erfindungsgemäßen Straffvorrichtung gemäß einer dritten Ausführungsform; und
- Figur 9 eine Schnittansicht der Vorrichtung aus Figur 8 entlang der Linie C-C.

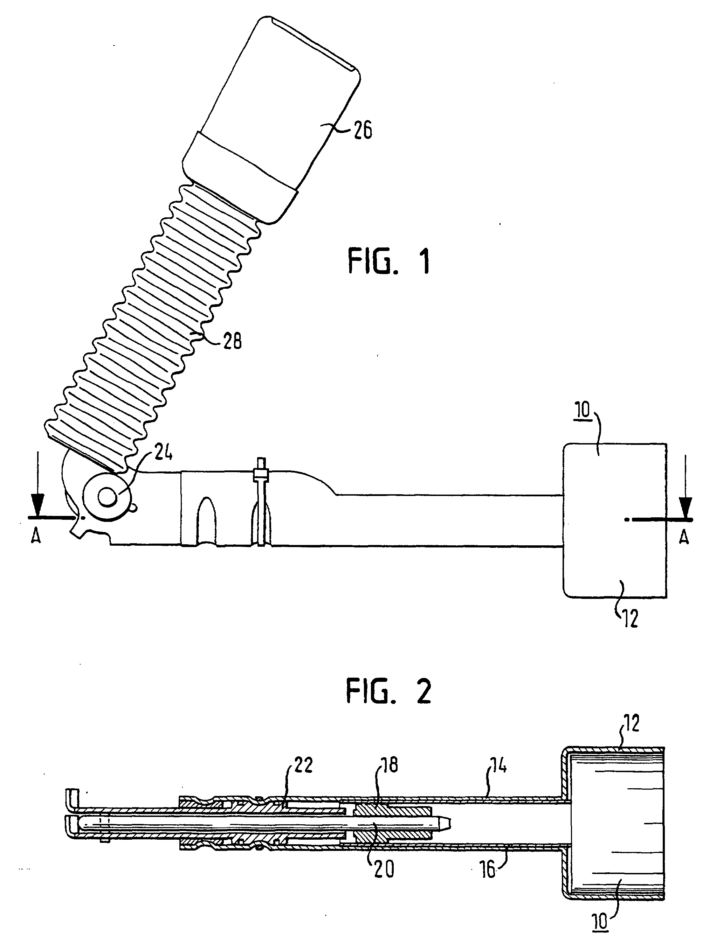

In den Figuren 1 und 2 ist eine Gurtschloß-Straffvorrichtung dargestellt, die von einem Motor 10 angetrieben wird, der in einem Gehäuse 12 mit einem langgestreckten zylindrischen Fortsatz 14 untergebracht ist. Der Motor 10 ist ein Gleichstrommotor mit bürstenlosem Innenläufer, der ein Startmoment von mehr als 2 Nm erreicht und ein Hochlaufen auf mehrere tausend Umdrehungen pro Minute innerhalb weniger Millisekunden gewährleistet. An den Motor 10 ist eine langgestreckte Gewindehülse 16 mit einem Innengewinde gekoppelt, die in den Gehäusefortsatz 14 hineinragt. Innerhalb der Gewindehülse 16 ist ein Gewindekörper 18 mit einem zu dem Innengewinde der Hülse 16 passenden Außengewinde angeordnet. Durch Drehen der Gewindehülse 16 kann der Gewindekörper 18 in axialer Richtung in Abhängigkeit von der Drehrichtung zum Motor 10 hin und vom Motor 10 weg bewegt werden.

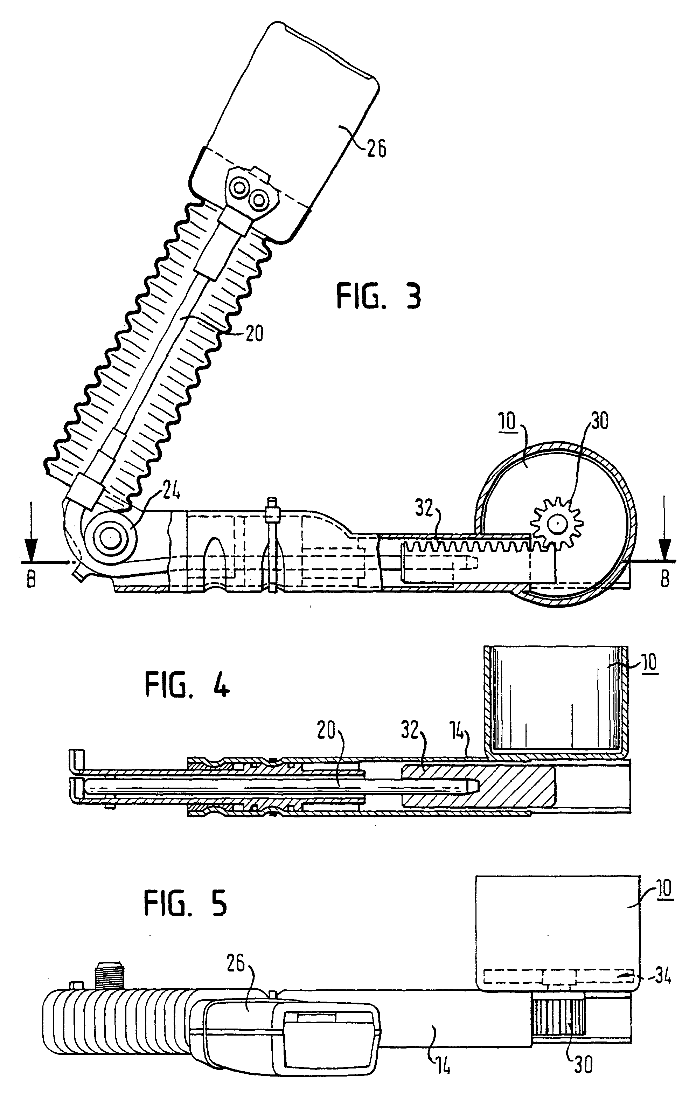

Der Gewindekörper 18 weist eine zentrale Axialbohrung auf, in der ein erstes Ende eines steifen Zugseils 20 verpreßt ist. Das Zugseil 20 ist durch mehrere Führungselemente 22 aus dem Gehäusefortsatz 14 heraus- und über eine Umlenkeinrichtung 24 schräg nach oben geführt. Das zweite Ende des Zugseils 20 ist an ein Gurtschloß 26 gekoppelt (siehe Figur 3), dessen Längsrichtung mit der des schräg nach oben geführten Zugseilabschnitts übereinstimmt. In dem Bereich zwischen der Umlenkeinrichtung 24 und dem Gurtschloß 26 ist das Zugseil von einer Umhüllung 28 umgeben, die sich an ihren Enden an der Umlenkreinrichtung 24 bzw. am Gurtschloß 26 abstützt. Die Umhüllung 28 ist so nachgiebig ausgestaltet, daß sie in Längsrichtung ohne nennenswerten Widerstand zusammenpreßbar und wieder auseinanderziehbar ist.

Die Drehbewegung des Motors 10 wird über die Gewindehülse 16 und den Gewindekörper 18 in eine Linearbewegung des Zugseils 20 umgewandelt, welche wiederum über die Umlenkeinrichtung 24 und die Kopplung an das Gurtschloß 26 in eine Längsbewegung des Gurtschlosses 26 umgewandelt wird. So kann das Gurtschloß 26 durch den Motor 10 aus seiner in Figur 1 gezeigten Normalposition auf die Umlenkeinrichtung 24 zu bewegt werden. Der Motor 10 ist in der Lage, die für einen Straffvorgang erforderliche Antriebsleistung in bezug auf Anlaufzeit, Startmoment und Drehzahl zu erbringen. Erleichternd kommt im Vergleich zu einer Straffvorrichtung, die nur am Schulter- oder nur am Beckengurtabschnitt angreift, hinzu, daß durch das Wegziehen des Gurtschlosses 26 sowohl der Schulter- als auch der Beckengurtabschnitt gestrafft werden, so daß eine vergleichsweise kurze Wegstrecke des Gurtschlosses 26 für eine ausreichende Straffung des gesamten Sicherheitsgurts ausreicht. Durch Variation der Gewindesteigung der Gewindehülse 16 und des Gewindekörpers 18 kann die Umsetzung der Dreh- in eine Linearbewegung gezielt beeinflußt werden.

Nach einem Straffvorgang kann das Gurtschloß 26 wieder in seine Normalposition zurückgebracht werden, indem der Motor 10 mit entgegensetzter Drehrichtung betrieben wird. Die Vorrichtung ist auch geeignet, eine Schloßgeber-Funktion auszuführen. So kann das Schloß 26 über den Motorantrieb zunächst in eine erhöhte Position gebracht werden, um das Einstecken der Schloßzunge des Sicherheitsgurts zu erleichtern. Anschließend wird das Schloß 26 für den Fahrbetrieb des Fahrzeugs wieder in seine tiefergelegene Normalposition befördert, aus der es für einen Straffvorgang nach unten weggezogen werden kann.

Die in den Figuren 3 bis 5 dargestellte Variante der Gurtschloß-Straff vorichtung unterscheidet sich von der zuvor beschriebenen Ausführungsform durch die Anordnung des Motors 10 und die Umsetzung der Drehbewegung des Motors 10 in eine Linearbewegung des Zugseils 20. Der Motor 10 ist quer zu dem Gehäusefortsatz 14 angeordnet und trägt auf seiner Antriebswelle ein Ritzel 30. Das Ritzel 30 ragt durch eine Öffnung in den Gehäusefortsatz 14 hinein und steht in Eingriff mit einer in dem Gehäusefortsatz längsverschieblich gehaltenen Zahnstange 32. Die Zahnstange 32 weist wie der Gewindekörper bei der vorigen Ausführungsform eine zentrale Axialbohrung auf, in der das Zugseil 20 verpreßt ist. Zwischen der Antriebswelle des Motors 10 und dem Ritzel 30 ist ein Planetengetriebe 34 vorgesehen, das für eine für die Bewegung der Zahnstange 32 geeignete Übersetzung sorgt.

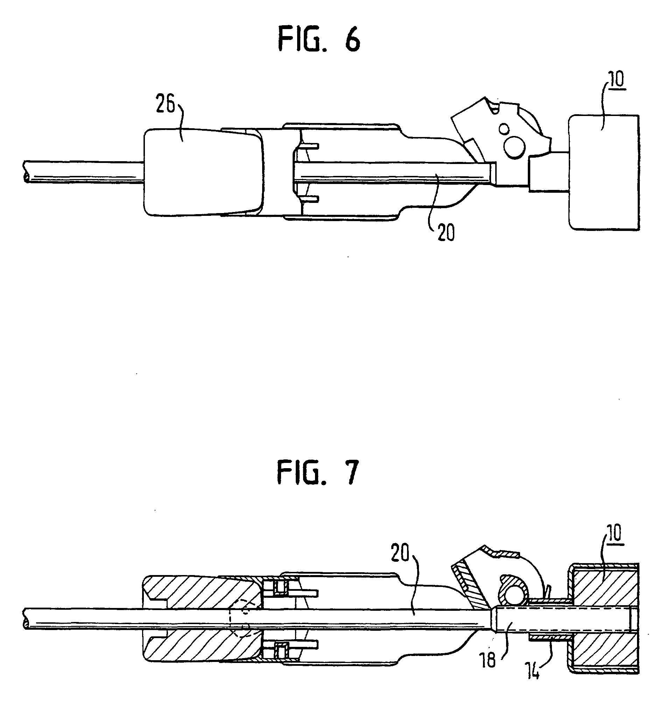

Bei der in den Figuren 6 und 7 gezeigten Vorrichtung handelt es sich wiederum um eine Gurtschloß-Straffvorrichtung, allerdings mit linearem Aufbau. Eine Einrichtung zur Umlenkung des Zugseils 20 ist nicht vorgesehen. Der Rotor des Motors 10 ist bei der gezeigten Ausführungsform mit einem Innengewinde versehen, in das das Außengewinde des Gewindekörpers 18 eingreift, der wiederum mit einem Endabschnitt des Zugseils verbunden ist. Alternativ zu dem Innengewinde am Rotor kann der Antrieb auch wie bei der Ausführungsform der Figuren 1 und 2 über eine Gewindehülse oder wie bei der Ausführungsform der Figuren 3 bis 5 über ein Ritzel und eine Zahnstange erfolgen.

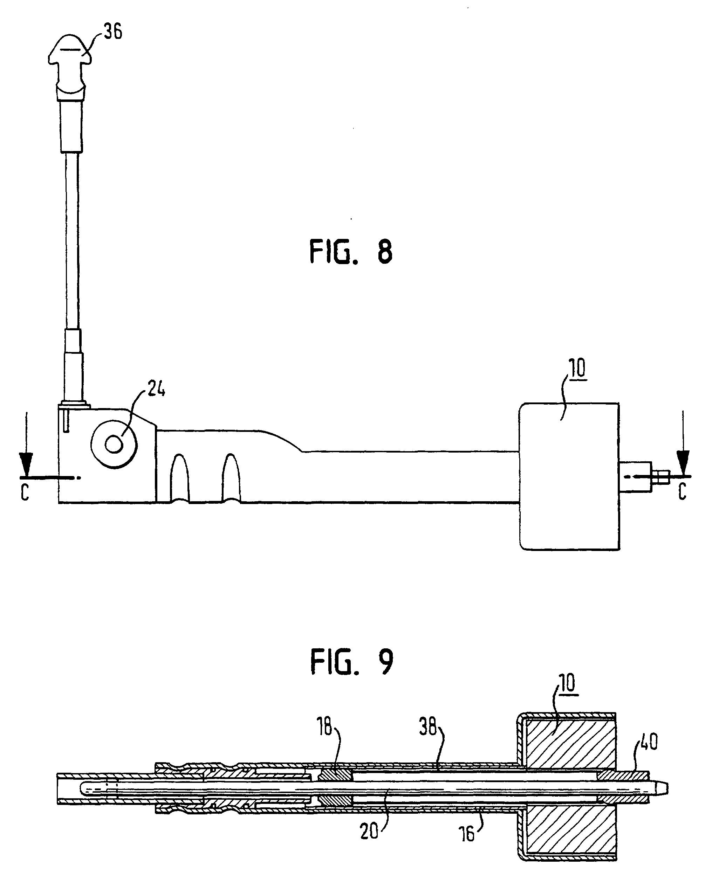

Der Aufbau der in den Figuren 8 und 9 gezeigten Straffvorrichtung entspricht im wesentlichen dem der Ausführungsform der Figuren 1 und 2. Die Vorrichtung ist jedoch nicht als Gurtschloß- sondern als Endbeschlag-Straffer ausgebildet, d.h. das zweite Ende des Zugseils 20 ist an einen Endbeschlag 36 des Sicherheitsgurts gekoppelt, der üblicherweise im Bereich der B-Säule des Fahrzeugs angeordnet ist. Ferner bilden ein mit einem Ende am Gewindekörper 18 abgestütztes und mit dem anderen freien Ende in den Motorinnenraum ragendes Deformationsrohr 38 und ein im wesentlichen zylindrischer Deformationskörper 40 eine Kraftbegrenzungseinrichtung. Der Deformationskörper 40 ist auf das erste Ende des sich durch das Deformationsrohr 38 erstreckenden Zugseils 20 aufgepreßt und ist mit einer Verdickung versehen die an dem motorseitigen Ende des Deformationsrohres 38 angreift.

Nach einem Straffvorgang, bei dem sich der Gewindekörper 18 mit dem Zugseil 20 und dem Deformationsrohr 38 auf den Motor zu bewegt hat, erfährt das Seil 20 im anschließenden Rückhaltefall infolge der kinetische Energie des Fahrzeuginsassen eine Zugkraft in entgegengesetzter Richtung. In dieser Phase ist der Motor 10 blockiert, so daß der Gewindekörper 18 und das Deformationsrohr 38 eine starre Position einnehmen. Der Deformationskörper 40 dringt aufgrund der auf das Seil 20 ausgeübten Zugkraft unter plastischer Verformung des Deformationsrohres 38 in dieses ein. Das Eindringen des Deformationskörpers 40 ermöglicht das Nachgeben des Zugseils 20 und somit eine effektive Kraftbegrenzung der Rückhaltekraft auf den Fahrzeuginsassen.

## Patentansprüche

1. Vorrichtung zum Straffen eines Sicherheitsgurts, mit einem Motor (10) und einem Zugübertragungsmittel (20), dessen eines Ende an ein Gurtschloß (26) oder einen Endbeschlag (36) des Sicherheitsgurts gekoppelt ist wobei das Zugübertragungsmittel (20) so an den Motor (10) gekoppelt ist, daß die Antriebsbewegung des Motors (10) in eine Längsbewegung des Zugübertragungsmittels (20) umgewandelt wird, **dadurch gekennzeichnet, daß** der Motor (10) als Strafferantrieb für eine Notfall-Straffung ausgebildes ist.

2. Vorrichtung nach Anspruch 1, **dadurch gekennzeichnet, daß** der Motor (10) ein bürstenloser Gleichstrommotor mit Innenläufer ist.

3. Vorrichtung nach Anspruch 1 oder 2, **dadurch gekennzeichnet, daß** der Motor (10) mit verschiedenen Geschwindigkeiten betrieben werden kann.

4. Vorrichtung nach einem der vorhergehenden Ansprüche, **dadurch gekennzeichnet, daß** der Motor (10) in zwei entgegengesetzten Richtungen betrieben werden kann.

5. Vorrichtung nach einem der vorhergehenden Ansprüche, **dadurch gekennzeichnet, daß** an den Motor (10) eine Gewindehülse (16) mit Innengewinde gekoppelt und in der Gewindehülse (16) ein Gewindekörper (18) mit passendem Außengewinde angeordnet ist, an dem das andere Ende des Zugübertragungsmittels (20) befestigt ist.

6. Vorrichtung nach einem der Ansprüche 1 bis 4, **dadurch gekennzeichnet, daß** der Motor (10) ein Ritzel (30) antreibt, das in eine Zahnstange (32) eingreift, an welcher das andere Ende des Zugübertragungsmittels (20) befestigt ist.

7. Vorrichtung nach Anspruch 6, **dadurch gekennzeichnet, daß** zwischen dem Motor (10) und dem Ritzel (30) ein Planetengetriebe (34) vorgesehen ist.

8. Vorrichtung nach einem der Ansprüche 1-4, **dadurch gekennzeichnet, daß** der innenlaufende Rotor des Motors (10) ein Innengewinde aufweist, in das ein Außengewinde eines Gewindekörpers (18) eingreift, an welchem das andere Ende des Zugübertragungsmittels (20) befestigt ist.

9. Vorrichtung nach Anspruch 5 oder 8, **dadurch gekennzeichnet, daß** sich an dem Gewindekörper (18) ein Deformationsrohr (38) abstützt, in das ein mit dem Zugübertragungsmittel (20) verbundener Deformationskörper (40) unter plastischer Verformung des Deformationsrohres (38) eindringen kann.

## Claims

1. A device for tensioning a safety belt, comprising a motor (10) and a traction transfer means (20), one end of which is coupled to a belt buckle (26) or to an end fitting (36) of the safety belt, the traction transfer means (20) being coupled to the motor (10) such that the driving movement of the motor (10) is converted into a longitudinal movement of the traction transfer means (20), **characterized in that** the motor (10) is configured as a tensioner drive for an emergency tensioning.

2. The device according to Claim 1, **characterized in that** the motor (10) is a brushless direct current motor having an internal rotor.

3. The device according to Claim 1 or 2, **characterized in that** the motor (10) can be operated at various speeds.

4. The device according to any of the preceding claims, **characterized in that** the motor (10) can be operated in two opposite directions.

5. The device according to any of the preceding claims, **characterized in that** a threaded sleeve (16) having an internal thread is coupled to the motor (10) and a threaded body (18) having a matching external thread is arranged in the threaded sleeve (16), the other end of the traction transfer means (20) being secured to the threaded body (18).

6. The device according to any of Claims 1 to 4, **characterized in that** the motor (10) drives a pinion (30) which engages into a rack (32) to which the other end of the traction transfer means (20) is secured.

7. The device according to Claim 6, **characterized in that** a planetary gearing (34) is provided between the motor (10) and the pinion (30).

8. The device according to any of Claims 1 to 4, **characterized in that** the internally running rotor of the motor (10) has an internal thread into which an external thread of a threaded body (18) engages, to which the other end of the traction transfer means (20) is secured.

9. The device according to Claim 5 or 8, **characterized in that** bearing against the threaded body (18) is a deformation tube (38), into which a deformation body (40) connected with the traction transfer means (20) can penetrate with plastic deformation of the deformation tube (38).

## Revendications

1. Dispositif de tensionnement d'une ceinture de sécurité, comportant un moteur (10) et un moyen de transmission de traction (20) dont une extrémité est accouplée à une serrure de ceinture (26) ou à une ferrure d'extrémité (36), le moyen de transmission de traction (20) étant accouplé au moteur (10) de telle sorte que le mouvement d'entraînement du moteur (10) est converti en un mouvement longitudinal du moyen de transmission de traction (20), **caractérisé en ce que** le moteur (10) est réalisé sous forme d'entraînement de prétensionneur pour un tensionnement d'urgence.

2. Dispositif selon la revendication 1, **caractérisé en ce que** le moteur est un moteur de courant continu sans balais et avec rotor intérieur.

3. Dispositif selon la revendication 1 ou 2, **caractérisé en ce que** le moteur peut fonctionner à différentes vitesses.

4. Dispositif selon l'une des revendications précédentes, **caractérisé en ce que** le moteur (10) peut fonctionner dans deux directions opposées.

5. Dispositif selon l'une des revendications précédentes, **caractérisé en ce qu'**une douille taraudée (16) avec pas de vis intérieur est accouplée au moteur (10) et dans la douille taraudée (16) est agencé un corps fileté (18) avec pas de vis extérieur adapté, sur lequel est fixée l'autre extrémité du moyen de transmission de traction (20).

6. Dispositif selon l'une des revendications 1 à 4, **caractérisé en ce que** le moteur (10) entraîne un pignon (30) qui s'engrène dans une crémaillère (32) sur laquelle est fixée l'autre extrémité du moyen de transmission de traction (20).

7. Dispositif selon la revendication 6, **caractérisé en ce qu'**entre le moteur (10) et le pignon (30) est prévu un engrenage planétaire (34).

8. Dispositif selon l'une des revendications 1 à 4, **caractérisé en ce que** le rotor à rotation intérieure du moteur (10) présente un pas de vis intérieur dans lequel s'engage un pas de vis extérieur d'un corps fileté (18) sur lequel est fixée l'autre extrémité du moyen de transmission de traction (20).

9. Dispositif selon la revendication 5 ou 8, **caractérisé en ce que** sur le corps fileté (18) prend appui un tube de déformation (38) dans lequel un corps de déformation (40) relié au moyen de transmission de traction (20) peut pénétrer en déformant plastiquement le tube de déformation (38).
